# EUROPÄISCHE PATENTSCHRIFT

(11) **EP 0 880 885 B1**
(45) Veröffentlichungstag und Bekanntmachung des Hinweises auf die Patenterteilung: **13.11.2002**
(21) Anmeldenummer: 98104972.9
(22) Anmeldetag: 19.03.1998
(51) Int. Cl.: A01F 12/40

(54) **Mähdrescher**
Combine
Moissonneuse-batteuse

(30) Priorität: 30.05.1997 DE 19722793
(43) Veröffentlichungstag der Anmeldung: 02.12.1998
(73) Patentinhaber: CLAAS Selbstfahrende Erntemaschinen GmbH, 33428 Harsewinkel (DE)
(72) Erfinder: Heidjann, Franz, 33428 Harsewinkel (DE); Roberg, Alfons, 33428 Harsewinkel (DE)

(56) Entgegenhaltungen:
- EP-A- 0 748 583
- US-A- 2 053 148
- US-A- 3 165 133

## Beschreibung

Die Erfindung betrifft einen Mähdrescher mit einem Mähtisch und einem Dreschwerk, dem sich in Gutflußrichtung mindestens eine nach dem Axialflußverfahren arbeitende Trenneinrichtung anschließt, die mit einem rotierend antreibbaren Trennrotor ausgerüstet ist, wobei in die Trenneinrichtung Häckselmesser einer Häckselmessergruppe hineinragen, die in der Häckselstellung in einem Ringspalt zwischen dem Trennrotor und dem Gehäuse stehen, wobei der Trennrotor von einem Gehäuse umgeben ist, welches an seinem, Gutausflußende einen radialen Ausschnitt aufweist und wobei zumindest die obere Abdeckhaube innenseitig mit den Förderelementen des Trennrotors zugeordneten Leitelementen versehen ist.

Ein Mähdrescher dieser Art ist aus der EP-A-0 748 583 bekannt. Die Förderelemente jedes Trennrotors verlaufen spiral-, wendel- oder schraubenlinienförmig um den zylindrischen Grundkörper herum. Die feststehenden, als Stege ausgebildeten Leitelemente des Gehäuses verlaufen in einer Steigung, die auf die Förderelemente des Trennrotors abgestimmt ist. Da die Häckselmesser auf einer zur Drehachse des Trennrotors achsparallelen Tragachse angeordnet sind, stehen die Leitelemente im Bereich der Axialflußhäckseleinrichtung unter einem spitzen Winkel zu den Häckselmessern. Dadurch werden keine optimalen Voraussetzungen für den Häckselvorgang geschaffen, da das zu häckselnde Gut zu schnell den Wirkungsbereich der Häckseleinrichtung durchläuft. Ferner liegt bei der vorbekannten Ausführung die Axialflußhäckseleinrichtung im Abstand zum hinteren Austragende des Trennrotors. Diese Lage ist für Reparatur- und Wartungsarbeiten ungünstig. Außerdem ist kein kontinuierlicher Austrag des Häckselgutes gewährleistet.

Der vorliegenden Erfindung liegt die Aufgabe zugrunde, einen Mähdrescher der eingangs näher beschriebenen Art so zu gestalten, daß die Qualität des Häckselgutes gegenüber der vorbekannten Ausführung verbessert wird und daß ein kontinuierlicher Austrag sichergestellt ist.

Die gestellte Aufgabe wird gelöst, indem sich die Axialhäckseleinrichtung mit ihrem Gutabgabeende in den Bereich des radialen Ausschnitts der Auslaßöffnung des Gehäuses erstreckt und ihr Gutannahmeende unter Einbeziehung mindestens eines Häckselmessers nur einen Teilbereich des ringsum geschlossenen Rotorgehäuses bildet. Die Leitelemente des Gehäuses, die im, in Flußrichtung des Häckselgutes gesehen, hinteren Bereich der Häckselmessergruppe angeordnet sind, weisen in einer bevorzugten Ausführungsform eine in Drehrichtung des Rotors abnehmende Steigung auf, so daß wenigstens der direkt vor der Häckselmessergruppe liegende Bereich jedes Leitelementes des Gehäuses senkrecht oder annähernd senkrecht zur Drehachse des Rotors steht. Die Leitelemente des Gehäuses sind nunmehr so gelegt, daß das Häckselgut im wesentlichen senkrecht zu den Häckselmessern steht, wenn es von den Förderelementen des Rotors antransportiert wird. Dadurch werden für den Häckselvorgang optimale Voraussetzungen geschaffen, so daß das Häckselgut je nach den Abständen zwischen den Häckselmessem extrem kurz ist. Allein dadurch ist schon der kontinuierliche Austrag des Häckselgutes gewährleistet. Dabei ist es dann ausreichend, wenn die in Flußrichtung hinteren Leitelemente eine abnehmende Steigung aufweisen, da durch den Trennrotor ein kontinuierlicher Transport des Häckselgutes gewährleistet ist. Zweckmäßigerweise sind die Leitelemente des Gehäuses so gestaltet, daß die den Häckselmessern zugeordnete Hälfte senkrecht oder annähernd senkrecht zur Drehachse des Rotors steht. Bei der erfindungsgemäßen Gestaltung des Mähdreschers wird der der Häckselmessergruppe zugeordnete Bereich der Leitelemente in einen, bezogen auf die Flußrichtung des Häckselgutes, vorderen Bereich mit gleichbleibender Steigung und einen hinteren Bereich unterteilt, in dem die der Häckselmessergruppe zugewandten Bereiche der Leitelemente im wesentlichen senkrecht zur Drehachse des Rotors stehen, während die der Häckselmessergruppe abgewandten Bereiche entsprechend spiral-, wendel- oder schraubenlinienförmig verlaufen wie die davor liegenden Leitelemente. Die Bereiche, die senkrecht oder annähernd senkrecht zur Drehachse des Rotors stehen, bewirken eine Reduzierung der axialen Förderwirkung im radialen Auswurfbereich. Eine optimale Qualität des Häckselgutes ist gegeben, wenn die Länge des hinteren Bereiches doppelt oder annähernd doppelt so groß ist, wie die des vorderen Bereiches. Die Qualität des Häckselgutes wird zusätzlich noch verbessert, wenn sich der Ringspalt im Bereich der Häckselmessergruppe in Drehrichtung des Rotors verengt. Dadurch findet eine Verdichtung des zu häckselnden Gutes statt, so daß der Schnittvorgang günstig wird, wenn die Radialschlitze der Förderelemente des Rotors an den Häckselmessern vorbeilaufen. Damit das zu häckselnde Gut vom Gehäuse in Richtung zum Trennrotor gedrückt wird, sollte sich der Ringspalt vom Gehäuse aus in Richtung zum Trennrotor verengen. Um dies konstruktiv zu lösen, ist vorgesehen, daß der der Häckselmessergruppe zugeordnete Bereich des Gehäuses als konturengerechte schwenkbare Klappe ausgebildet ist, die an einer zur Aufnahmeachse der Häckselmesser achsparallelen Schwenkachse drehfest gelagert ist und die mittels eines Schwenkantriebes schwenkbar ist. Dadurch kann die Klappe in verschiedene Stellungen geschwenkt werden. Die Steuerung des Schwenkantriebes erfolgt im Normalfall von der Steuereinheit, die in der Fahrerkabine montiert ist. Der Fahrer hat dann außerdem die Möglichkeit, im Falle einer Verstopfung den Ringspalt zu vergrößern, damit sich die Verstopfung auslöst. Eine konstruktiv einfache Lösung wird erreicht, indem die Klappe mittels die Schwenkachse bildenden Bolzen im außenseitig an das Gehäuse angesetzten Lageraugen gelagert ist und daß auf die Bolzen zwei Schwenkhebel drehfest aufgesetzt sind, die mittels einer Zugstange entgegen der Wirkung einer Feder von einem Antriebshebel in eine Stellung außerhalb des Gehäuses schwenkbar ist. Die beiden Schwenkhebel können über eine Traverse miteinander verbunden sein und an diese Traverse ist dann die Zugstange angelenkt. An den Antriebshebel wird dann ein Linearantrieb, vorzugsweise ein Hydraulikzylinder angeschlossen. Die Feder ist zweckmäßigerweise eine Druckfeder und wird auf die Zugstange geschoben. Sie drückt dann die Klappe stets in Richtung zum Trennrotor. Bei einem erhöhten Widerstand kann dann jedoch auch die Klappe ausweichen, damit der Ringspalt vergrößert wird. Da beispielsweise bei Fremdkörpern auch die Häckselmesser außerhalb des Ringspaltes geschwenkt werden sollen, ist in konstruktiv einfacher Weise vorgesehen, daß an der schwenkbaren Klappe die Aufnahmewelle für die Häckselmesser gelagert ist und daß die Messerhalter für die Häckselmesser fest mit der Klappe verbunden sind. Dieser Messerhalter ist beispielsweise in einfachster Ausführung eine durchgehende Profilschiene vorzugsweise mit einem U-förmigen Querschnitt. Sofern das Stroh nicht gehäckselt werden soll, kann dann die Klappe zusammen mit den Häckselmessern in die Außerbetriebsstellung geschwenkt werden. Damit im Bedarfsfalle die Häckselmesser und die Klappe unabhängig voneinander entgegen der Federkraft ausweichen können, das Schwenken von der Häckselstellung in die Außerbetriebsstellung und umgekehrt jedoch mit einem einzigen Linearantrieb erfolgen kann, ist alternativ vorgesehen, daß die Häckselmesser an einem Hebelsystem angeordnet sind, an das eine zweite Zugstange angelenkt ist, die synchron mit der ersten Zugstange bewegbar ist, so daß entgegen der Wirkung einer Druckfeder die Häckselmesser oder die Klappe unabhängig voneinander ohne Betätigung eines auf die Zugstange wirkenden Linearantriebes verschwenkbar sind. Der kontinuierliche Austrag des Häckselgutes erfolgt in bestmöglicher Form, wenn die Axialflußhäckseleinrichtung, bezogen auf die Flußrichtung des Häckselgutes im hinteren Endbereich des Trennrotors liegt.

An Hand der beiliegenden Zeichnungen wird die Erfindung noch näher erläutert. Es zeigen:
- Figur 1: einen erfindungsgemäßen Mähdrescher in einer schematischen Seitenansicht,
- Figur 2: den hinteren, die Axialflußhäckseleinrichtung bildenden Bereich des Trennro tors in einer Seitenansicht,
- Figur 3: einen Schnitt längs der Linie III - III in der Figur 1 in einer ersten Ausführungsform,
- Figur 4: einen Schnitt längs der Linie IV - IV in der Figur 1 in einer zweiten Ausführungsform,
- Figur 5: eine rückwärtige Stirnansicht auf den Trennrotor und auf das Gehäuse, entgegen der Flußrichtung des Häckselgutes gesehen und
- Figur 6: eine rückwärtige Stirnansicht des Trennrotors, den Eingriff der Förderelemente des Trennrotors mit den Häckselmessern zeigend.

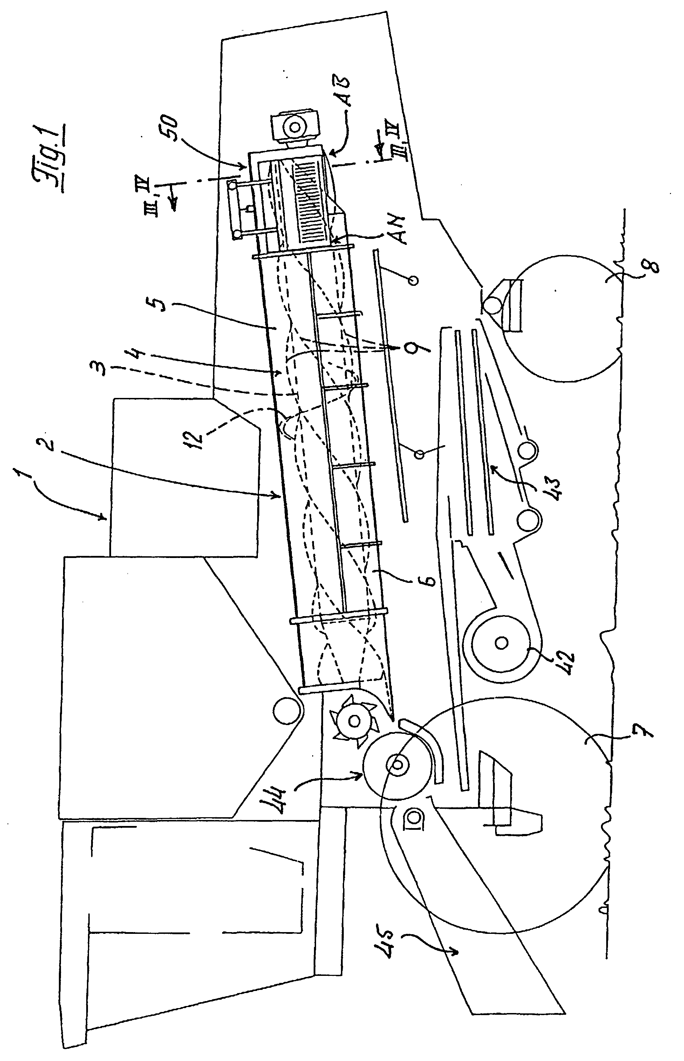

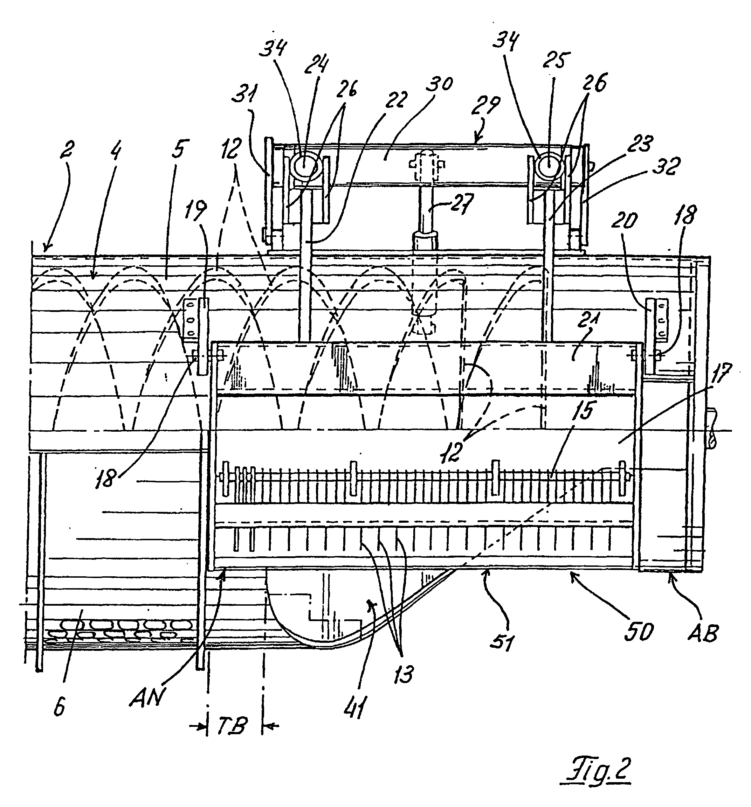

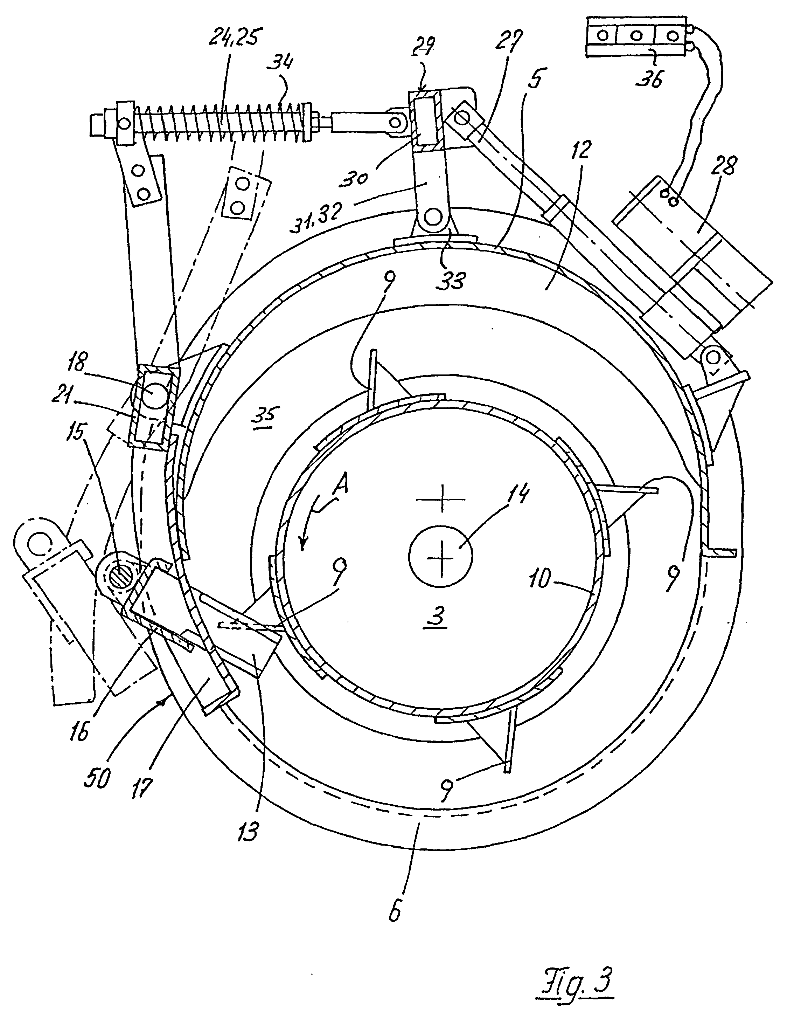

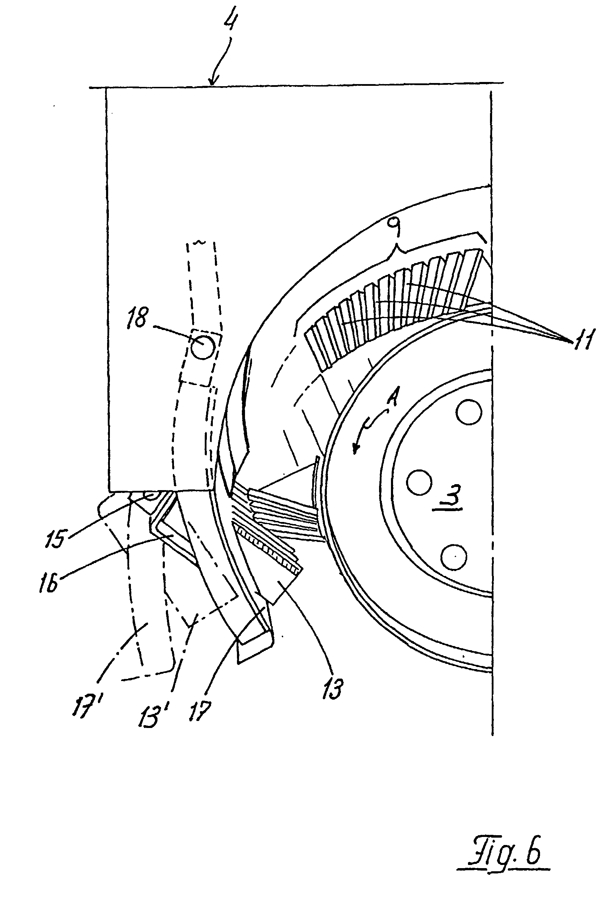

Der in der Figur 1 dargestellte Mähdrescher 1 ist als selbstfahrender Mähdrescher ausgebildet, der mit einer nach dem Axialflußverfahren arbeitenden Trenneinrichtung 2 ausgerüstet ist. Diese Trenneinrichtung 2 beinhaltet einen rotierend antreibbaren Trennrotor 3, der von einem Gehäuse 4 umgeben ist. Dieses Gehäuse besteht aus einem Oberteil in Form einer Haube 5 und einem Unterteil in Form eines Abscheidekorbes 6. Im dargestellten Ausführungsbeispiel liegt die Drehachse des Trennrotors 3 quer zu den Radachsen der Räderpaare 7, 8 des Mähdreschers 1. Demzufolge ist die Förderrichtung des Trennrotors 3 entgegengesetzt zur Vorwärtsfahrtrichtung des Mähdreschers 1. Der Trennrotor ist außerdem mit vier die Förderelemente bildenden Förderleisten 9 versehen, die wendelförmig um den Grundkörper 10 herumgeführt sind. Im hinteren, dem Abgabeende des Trennrotors 3 zugeordneten Bereich ist der Rotor 3 wie auch der örtlich zugehörige Bereich des Rotorgehäuses 4 als eine Axialflußhäckseleinrichtung 50 ausgebildet. Hiefür sind die Förderleisten 9 mit im Abstand zueinander angeordneten Radialschlitzen 11 versehen, die nach außen, d.h. der der Drehachse des Trennrotors 3 abgewandten Seite offen sind. Diese Radialschlitze 11 sind besonders in der Figur 6 zu erkennen. Die Figur 2 zeigt, daß innenseitig an der Haube 5 eine Vielzahl von Leitelementen 12 angesetzt ist, die entsprechend den Förderelementen 9 mit einer entsprechenden Steigung verlaufen. Die Leitelemente 12 sind einfache Stege. Dem hinteren Endbereich des Trennrotors 3 ist eine Reihe von Häckselmessern 13 zugeordnet, die auf einer der Drehachse 14 des Trennrotors 3 abgewandt liegenden Tragachse 15 aufgesetzt sind, die achsparallel zur Drehachse 14 steht. Außerdem sind die Häckselmesser 13 in einem durchgehenden, aus einem U-Profil gebildeten Messerhalter 16 geführt. Im Bereich der Häckselmesser 13 ist das Gehäuse 4 als schwenkbare Klappe 17 ausgebildet. Die Schwenkachse 18 für die Klappe 17 liegt oberhalb der Tragachse 15 für die Häckselmesser 13 und verläuft parallel dazu. Die nur eine Teilansicht der Trenneinrichtung 2 zeigende Figur 2 zeigt jedoch deutlich, daß die Leitelemente 12 des Gehäuses 4 im vorderen Bereich eine gleichbleibende Steigung haben. Diese Steigung ist gleichbleibend bis in den Einlaufbereich der die Häckselmesser 13 beinhaltenden Axialflußhäckseleinrichtung 50. Im hinteren Bereich der Axialflußhäckseleinrichtung verringert sich die Steigung der Leitelemente 12 in Drehrichtung des Rotors. Im dargestellten Ausführungsbeispiel stehen die Bereiche der Leitelemente 12, die den Häckselmessem 13 zugeordnet sind, senkrecht zur Drehachse des Trennrotors 3 und somit auch senkrecht zur Tragachse 15 für die Häckselmesser 13. Bei der Ausführung nach den Figuren 2 bis 4 besteht die Schwenkachse 18 aus zwei Bolzen die in Lageraugen 19, 20 eingesetzt sind. An ihrem oberen Ende ist die Klappe 17 mit einem Querrohr 21 versehen, dessen Enden mit den Schwenkbolzen 18 verbunden sind. An diesem Querrohr 21 sind zwei Hebelarme 22 und 23 befestigt, an deren freien Enden jeweils eine Zugstange 24 und 25 mit einem Ende in Laschen 26 angreift. Die Zugstangen 24, 25 sind mit der Kolbenstange 27 einer Linearantriebseinheit 28 verbunden, die sich der Schwenkachse 18 gegenüberliegend auf dem Haubenteil 5 abstützt. Als Verbindungsglied zwischen den Enden der Zugstangen 24, 25 und der Kolbenstange 27 ist eine Schwenkbrücke 29 vorgesehen. Diese besteht aus einer Travers 30, deren Enden Laschen 31, 32 aufweisen, die sich in Lagerkonsolen 33, die auf dem Äußeren einer Haube 5 befristet sind, schwenkbar abstützen. Die Kolbenstangen 24 und 25 sind teleskopisch federnd zwischen den Laschen 26 und der Schwenkbrücke 29 angeordnet. Unter Mitwirkung der Druckfedern 34 wird die Klappe 17 in die in Figur 3 dargestellte Häckselstellung geschwenkt. Die Auslegung ist so gewählt, daß sich der Ringspalt 30 zwischen dem Trennrotor 3 und dem Gehäuse 4 im Bereich oberhalb der Häckselmesser 13 verengt. Diese Häckselstellung der Klappe 17 ist so gewählt, daß die Förderelemente 9 des Trennrotors 3 in einem möglichst geringen Abstand an der Klappe 17 vorbeilaufen. Da der Messerhalter 16 und die Tragachse 15 mit der Klappe 17 fest verbunden sind, wird die Klappe 17 zusammen mit den Häckselmessern 13 in die in der Figur 3 in strichpunktierten Linien dargestellten Stellungen geschwenkt, sobald die von dem Häckselgut ausgehende Kraft so groß ist, daß die Druckfeder 34 zusammengedrückt wird. Gleichzeitig zeigt die Figur 3, daß von der zentralen Steuereinheit 36 aus der Linearantrieb 28 angesteuert werden kann, um die Klappe 17 und die Häckselmesser 13 in die Betriebsstellung oder in die Außerbetriebsstellung zu schwenken.

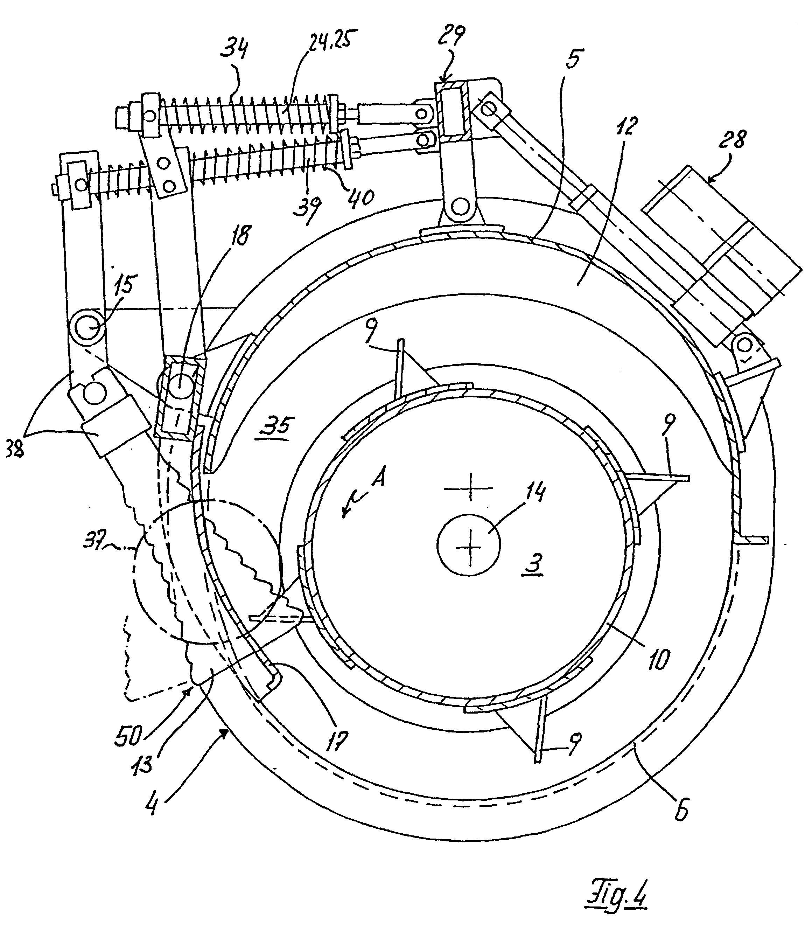

Die Ausführung nach Figur 4 unterscheidet sich von der Ausführung nach der Figur 3 dadurch, daß die Häckselmesser und die Klappe 17 zwar wiederum gemeinsam durch den Linearantrieb 28 in die Betriebsstellung bzw. Außerbetriebsstellung geschwenkt werden können. Zusätzlich können jedoch die Häckselmesser und die Klappe 17 unabhängig voneinander bewegt werden, wenn beispielsweise der von dem Häckselgut ausgehende Druck es erforderlich macht. Um zu verdeutlichen, daß die Häckselmesser 13 nicht nur als Klingen ausgebildet sein können, sondern auch gemäß der Darstellung nach der Figur 4 auch als Kreismesser 37. Die Häckselmesser 13 bzw. 37 können bei beiden Ausführungen an einer Hebeleinrichtung 38 angeordnet werden, wobei der Drehpunkt wiederum die Achse 15 ist. An die Hebeleinrichtung 38 greift eine weitere Zugstange 39 an, die ebenfalls von einer Druckfeder 40 umgeben ist. Das andere Ende der Zugstange 39 ist an der Schwenkbrücke 29 angelenkt. Die von den Druckfedern 34 und 40 aufgebrachten Kräfte können unterschiedlich sein, so daß beispielsweise die Häckselmesser 13 bzw. 37 bei einem geringeren Materialdruck ausweichen können als die Klappe 17 und auch umgekehrt.

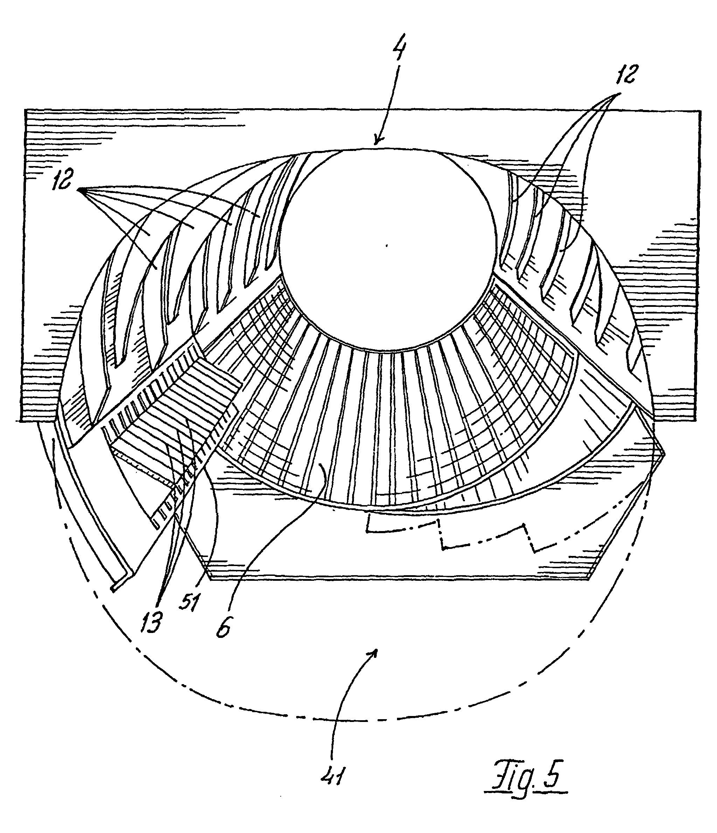

Die Drehrichtung des Trennrotors ist in den Figuren 3, 4, 6 durch den Pfeil A gekennzeichnet. Die Figuren 1 und 5 zeigen deutlich, daß die Leitelemente 12 des Gehäuses 4 im Bereich vor den Häckselmessern 13, bezogen auf die Drehrichtung A des Trennrotors 3 senkrecht zur Drehachse 14 des Trennrotors 3 verlaufen. Sie enden auch direkt vor den Häckselmessern 13.

Der Trennrotor 3 ist in der Figur 5 aus Gründen der vereinfachten Darstellung nicht gezeichnet. Aus den Figuren 1 und 5 ergibt sich außerdem noch, daß sich an den Abscheidekorb 6 die keil- oder stufenförmige Auslaßöffnung 41 für das Häckselgut anschließt. Dieser Auslaßöffnung 41 ist eine nicht dargestellte Verteileinrichtung zugeordnet. Die Figur 6 zeigt deutlich, daß die Förderleisten 9 spiral-, wendel- oder schraubenlinienförmig um den Grundkörper 10 des Trennrotors 3 herumgeführt sind. Die Radialschlitze 11 stehen so, daß im Bereich der Häckselmesser 13 diese kurzzeitig in die Radialschlitze 11 eingreifen, ohne daß sie sich berühren. Dadurch kann der Häckselvorgang als kontinuierlich bezeichnet werden, so daß die Häckselqualität extrem gut ist, da auch das Häckselgut durch die spezielle Form der Leitelemente 12 oberhalb der Häckselmesser 13 es ermöglicht, daß das Häckselgut quer zu den Häckselmessern 13 steht. In der Figur 6 ist die Häckselstellung der Klappe 17 und der Häckselmesser 13 in Vollinien dargestellt. Die ausgeschwenkte Stellung ist durch die Bezugszeichen 13' und 17' gekennzeichnet, die entweder durch Schwenken in die Außerbetriebsstellung oder durch einen erhöhten Druck des Häckselgutes eingenommen werden kann.

Im dargestellten Ausführungsbeispiel sind die Förderleisten 9 im Bereich der Axialflußhäckseleinrichtung 50 durch die Radialschlitze 11 unterbrochen. Sie können jedoch auch durch plattenförmige Elemente begrenzt werden, die in nicht näher erläuterter Weise mit dem Grundkörper 10 des Trennrotors 3 verbunden werden.

Der Mähdrescher 1 ist ferner noch mit einem unterhalb des Trennrotors 3 liegenden Gebläse 42 und einer ebenfalls unterhalb des Trennrotors 3 liegenden Siebeinrichtung 43 ausgerüstet. Außerdem ist der Mähdrescher 1 in an sich bekannter Weise mit einem das Mähgut von einem nicht dargestellten Mähtisch übernehmenden und zu einem Dreschwerk 44 fördernden Schrägförderer 45 ausgerüstet. Im dargestellten Ausführungsbeispiel besteht das Dreschwerk 44 aus einer Dreschtrommel 46 und einer Übergabetrommel 47, die unmittelbar vor dem Aufgabeende des Trennrotors 3 zu dessen Drehachse gelagert ist. Die Erfindung ist jedoch auch in Mähdrescher anwendbar , deren Dreschwerk nach dem Axialprinzip arbeitet oder deren Dreschwerk aus mehreren Trommeln besteht. Auch kann der erfindungsgemäß ausgestaltete Trenn- oder Abgaberotor quer zur Fahrtrichtung des Mähdreschers angeordnet sein.

Entgegen den zeichnerisch dargestellten Ausführungen kann der Mähdrescher 1 mit mehreren Trenneinrichtungen 2 und einer entsprechenden Anzahl von Trennrotoren 3 ausgestattet sein.

### Bezugszeichenliste

- 1 -: Mähdrescher
- 2 -: Trenneinrichtung
- 3 -: Trennrotor
- 4 -: Gehäuse
- 5 -: Haube
- 6 -: Abscheidekorb
- 7 -: Räderpaar
- 8 -: Räderpaar
- 9 -: Förderleisten
- 10 -: Grundkörper
- 11 -: Radialschlitze
- 12 -: Leitelemente
- 13 -: Häckselmesser
- 14 -: Drehachse Trennrotor
- 15 -: Tragachse
- 16 -: Messerhalter
- 17 -: schwenkbare Klappe
- 18 -: Schwenkachse
- 19 -: Lageraugen
- 20 -: Lageraugen
- 21 -: Querrohr
- 22 -: Hebelarme
- 23 -: Hebelarme
- 24 -: Zugstange
- 25 -: Zugstange
- 26 -: Laschen
- 27 -: Kolbenstange
- 28 -: Linearantriebseinheit
- 29 -: Schwenkbrücke
- 30 -: Traverse
- 31 -: Laschen
- 32 -: Laschen
- 33 -: Lagerkonsolen
- 34 -: Druckfeder
- 35 -: Ringspalt
- 36 -: Steuereinheit
- 37 -: Kreismesser
- 38 -: Hebeleinrichtung
- 39 -: Zugstange
- 40 -: Druckfeder
- 41 -: Auslaßöffnung
- 42 -: Gebläse
- 43 -: Siebeinrichtung
- 44 -: Dreschwerk
- 45 -: Schrägförderer
- 46 -: Dreschtrommel
- 47 -: Übergabetrommel
- 50 -: Axialflußhäckseleinrichtung
- 51 -: Begrenzungskante

- AB -: Gutabgabeende
- AN -: Gutannahmeende
- TB -: Teilbereich

## Patentansprüche

1. Mähdrescher mit einem Mähtisch, und einem Dreschwerk (44), dem sich in Gutflußrichtung mindestens eine nach dem Axialflußverfahren arbeitende Trenneinrichtung (2) anschließt, die mit einem rotierend antreibbaren Trennrotor (3) ausgerüstet ist, wobei in die Trenneinrichtung Häckselmesser (13) einer Häckselmessergruppe hineinragen, die in der Häckselstellung in einen Ringspalt zwischen dem Trennrotor und dem Gehäuse (4) stehen, wobei der Trennrotor von einem Gehäuse (4) umgeben ist, welches an seinem Gutausflußende einen Ausschnitt aufweist und wobei zumindest die obere Abdeckhaube (5) innenseitig mit den Förderelementen des Trennrotors zugeordneten Leitelementen (12) versehen ist,
**dadurch gekennzeichnet,**
**daß** sich die Axialhäckseleinrichtung (50) mit ihrem Gutabgabeende (AB) in den Bereich des radialen Ausschnitts der Auslaßöffnung (41) des Gehäuses (4) erstreckt und ihr Gutannahmeende (AN) unter Einbeziehung mindestens eines Häckselmessers (13, 37) nur einen Teilbereich (TB) des ringsum geschlossenen Rotorgehäuses bildet.

2. Mähdrescher nach Anspruch 1,
**dadurch gekennzeichnet,**
**daß** im Anschluß an den Teilbereich (TB) des Rotorgehäuses (4) das Gehäuse (4) einen radial verlaufenden keil- oder stufenförmigen Ausschnitt aufweist, dessen parallel zur Rotordrehachse verlaufende Begrenzungskante (51 von der Axialhäckseleinrichtung (50) gebildet wird.

3. Mähdrescher nach Anspruch 1 oder 2,
**dadurch gekennzeichnet,**
**daß** zumindest die Leitelemente (12) des Gehäuses (4) die im, in Flußrichtung des Häckselgutes gesehen, hinteren Bereich der Häckselmessergruppe (13) angeordnet sind, eine in Drehrichtung des Trennrotors (3) abnehmende Steigung aufweisen, so daß wenigstens der direkt vor der Häckselmessergruppe (13) liegende Bereich jedes Leitelementes (12) senkrecht oder annähernd senkrecht zur Drehachse des Trennrotors (3) steht.

4. Mähdrescher nach Anspruch 3,
**dadurch gekennzeichnet,**
**daß** die der Häckselmessergruppe (13) zugeordnete Hälfte der Leitelemente im wesentlichen senkrecht zur Drehachse des Trennrotors (3) steht.

5. Mähdrescher nach Anspruch 4,
**dadurch gekennzeichnet,**
**daß** der der Häckselmessergruppe (13) zugeordnete Bereich der Leitelemente (12) in eine, bezogen auf die Flußrichtung des Häckselgutes, vorderen Bereich mit gleichbleibender Steigung und einen hinteren Bereich unterteilt ist, in den die der Häckselmessergruppe (13) zugewandten Bereiche der Leitelemente (12) im wesentlichen senkrecht zur Drehachse (14) des Trennrotors (3) stehen.

6. Mähdrescher nach Anspruch 5,
**dadurch gekennzeichnet,**
**daß** die Länge des hinteren Bereiches doppelt oder annähernd doppelt so groß ist wie die Länge des vorderen Bereiches.

7. Mähdrescher nach Anspruch 6,
**dadurch gekennzeichnet,**
**daß** der Ringspalt (35) zwischen dem Trennrotor (3) und dem Gehäuse (4) im hinteren Bereich vor der Häckselmessergruppe (13) für Häckselfunktion verengt und bei Funktion Schwadablage erweitert eingestellt werden kann.

8. Mähdrescher nach Anspruch 7,
**dadurch gekennzeichnet,**
**daß** der der Häckselmessergruppe (13) zugeordnete Bereich des Gehäuses (4) als konturengerechte Klappe (17) ausgebildet ist, die an einer zur Aufnahmeachse (15) der Häckselmesser (13) achsparallelen Schwenkachse (18) drehfest gelagert ist, die mittels eines Schwenkantriebes schwenkbar ist.

9. Mähdrescher nach Anspruch 7 und 8,
**dadurch gekennzeichnet,**
**daß** die Klappe (17) mittels die Schwenkachse (18) bildenden Bolzen in außenseitig an das Gehäuse (4) angesetzten Lageraugen (19, 20) gelagert ist, und daß auf den Bolzen einer Zugstange (26) entgegen der Wirkung einer Feder (29) von einem Antriebshebel (27) in eine Stellung außerhalb des Gehäuses (4) schwenkbar ist.

10. Mähdrescher nach einem oder mehreren der vorhergehenden Ansprüche 7 bis 9,
**dadurch gekennzeichnet,**
**daß** an der schwenkbaren Klappe (17) die Aufnahmeachse (15) für die Häckselmesser (13) gelagert ist und daß der Messerhalter (16) für die Häckselmesser (13) fest mit der Klappe verbunden ist.

11. Mähdrescher nach Anspruch 9,
**dadurch gekennzeichnet,**
**daß** die Häckselmesser (13) an einem Hebelsystem (38) angeordnet sind an das eine zweite Zugstange (39) angelenkt ist, die synchron mit den ersten Zugstangen (24, 25) bewegbar ist, so daß entgegen der Wirkung einer Druckfeder (40) die Häckselmesser (13) oder die Klappe (17) unabhängig voneinander ohne Betätigung eines auf die Zugstange wirkenden Linearantriebes (28) verschwenkbar sind.

12. Mähdrescher nach einem oder mehreren der vorhergehenden Ansprüche 1 bis 9,
**dadurch gekennzeichnet,**
**daß** die die Häckselmesser (13) und Radialschlitze (11) beinhaltende Axialflußhäckseleinrichtung (50) im hinteren Endbereich des Trennrotors angeordnet ist.

## Claims

1. A combine harvester comprising a cutting table and a threshing mechanism (44) which is adjoined in the direction of flow of material by at least one separating device (12) which operates in accordance with the axial flow process and which is provided with a rotatingly drivable separating rotor (3), wherein projecting into the separating device are chaff cutting blades (13) of a chaff cutting blade group which, in the chaff cutting position, extend into an annular gap between the separating rotor and the housing (4), wherein the separating rotor is surrounded by a housing (4) which at its material discharge end has a cut-out and wherein at least the upper cover hood (5) is provided on the inside with guide elements (12) associated with the conveyor elements of the separating rotor, **characterised in that** the axial chaff cutting device (50) extends with its material discharge end (AB) into the region of the radial cut-out of the outlet opening (41) of the housing (4) and its material receiving end (AN), with the incorporation of at least one chaff cutting blade (13, 37), forms only a portion (TB) of the rotor housing which is closed therearound.

2. A combine harvester according to claim 1 **characterised in that** adjoining the portion (TB) of the rotor housing (4) the housing (4) has a radially extending wedge-shaped or step-shaped cut-out whose boundary edge (51) which extends parallel to the axis of rotation of the rotor is formed by the axial chaff cutting device (50).

3. A combine harvester according to claim 1 or claim 2 **characterised in that** at least the guide elements (12) of the housing (4) which are arranged in the region of the chaff cutting blade group (13) which is the rear region as viewed in the direction of flow of the chaff material have a pitch which decreases in the direction of rotation of the separating rotor (3) so that at least the region of each guide element (12), which is directly in front of the chaff cutting blade group (13), is perpendicular or approximately perpendicular to the axis of rotation of the separating rotor (3).

4. A combine harvester according to claim 3 **characterised in that** the half of the guide elements, which is associated with the chaff cutting blade group (13), is substantially perpendicular to the axis of rotation of the separating rotor (3).

5. A combine harvester according to claim 4 **characterised in that** the region of the guide elements (12) which is associated with the chaff cutting blade group (13) is subdivided into a region of uniform pitch, which is a front region in relation to the direction of flow of the chaff material, and a rear region into which the regions of the guide elements (12), which are towards the chaff cutting blade group (13), extend substantially perpendicularly to the axis of rotation (14) of the separating rotor (3).

6. A combine harvester according to claim 5 **characterised in that** the length of the rear region is double or approximately double the length of the front region.

7. A combine harvester according to claim 6 **characterised in that** the annular gap (35) between the separating rotor (3) and the housing (4) narrows in the rear region in front of the chaff cutting blade group (13) for a chaff cutting function and can be set to an enlarged value for a swath deposit function.

8. A combine harvester according to claim 7 **characterised in that** the region of the housing (4) associated with the chaff cutting blade group (13) is in the form of a flap (17) of appropriate contour, which is non-rotatably mounted at a pivot axis (18) which is in axis-parallel relationship with the mounting axis (15) of the chaff cutting blades (13) and which is pivotable by means of a pivot drive.

9. A combine harvester according to claim 7 and claim 8 **characterised in that** the flap (17) is mounted by means of pins forming the pivot. axis (18) in mounting eyes (19, 20) which are fitted on the outside to the housing (4) and that a pull bar (26) is pivotable on the pins against the force of a spring (29) by a drive lever (27) into a position outside the housing (4).

10. A combine harvester according to one or more of preceding claims 7 to 9 **characterised in that** the mounting axis (15) for the chaff cutting blades (13) is mounted to the pivotable flap (17) and that the blade holder (16) for the chaff cutting blades (13) is fixedly connected to the flap.

11. A combine harvester according to claim 9 **characterised in that** the chaff cutting blades (13) are arranged on a lever system (38) to which there is pivotably connected a second pull bar (39) which is movable synchronously with the first pull bars (24, 25) so that the chaff cutting blades (13) or the flap (17) are pivotable independently of each other against the force of a compression spring (40) without actuation of a linear drive (28) acting on the pull bar.

12. A combine harvester according to one or more of preceding claims 1 to 9 **characterised in that** the axial flow chaff cutting device (50) which includes the chaff cutting blades (13) and radial slots (11) is arranged in the rear end region of the separating rotor.

## Revendications

1. Moissonneuse-batteuse avec une table de coupe et un mécanisme de battage (44) auquel fait suite, dans la direction d'écoulement du produit, au moins un dispositif de séparation (2) du type à flux axial, équipé d'un rotor de séparation (3) entraîné en rotation, dans laquelle des couteaux de hachage (13) d'un groupe de couteaux de hachage font saillie à l'intérieur du dispositif de séparation, couteaux qui, dans la position de hachage, sont disposés dans un espace annulaire entre le rotor de séparation et l'enveloppe, dans laquelle le rotor de séparation est entouré d'une enveloppe (4) présentant une échancrure à son extrémité de sortie du produit et dans laquelle au moins le capot supérieur (5) est pourvu côté intérieur d'éléments de guidage (12) associés aux éléments de transport du rotor de séparation, **caractérisée en ce que** le dispositif de hachage axial (50), avec son extrémité de sortie de produit (AB), s'étend dans la région de l'échancrure radiale de l'ouverture de sortie (41) de l'enveloppe (4) et que son extrémité d'entrée de produit (AN), en incluant au moins un couteau de hachage (13, 37), forme seulement une zone partielle (TB) de l'enveloppe de rotor entièrement fermée.

2. Moissonneuse-batteuse selon la revendication 1, **caractérisée en ce qu'**à la suite de la zone partielle (TB) de l'enveloppe de rotor (4), l'enveloppe de rotor (4) présente une découpe étagée ou en forme de coin dans la direction radiale, dont le bord (51) parallèle à l'axe du rotor est formé par le dispositif de hachage axial (50).

3. Moissonneuse-batteuse selon la revendication 1 ou 2, **caractérisée en ce qu'**au moins les éléments de guidage (12) de l'enveloppe (4), qui, vu dans la direction d'écoulement du produit haché, sont situés dans la région postérieure du groupe de couteaux de hachage (13), présentent une inclinaison qui diminue dans la direction de rotation du rotor de séparation (3), de telle sorte qu'au moins la zone de chaque élément de guidage (12) située immédiatement devant le groupe de couteaux de hachage (13) soit perpendiculaire ou sensiblement perpendiculaire à l'axe de rotation du rotor de séparation (3).

4. Moissonneuse-batteuse selon la revendication 3, **caractérisée en ce que** la moitié des éléments de guidage associés au groupe de couteaux de hachage (13) sontt sensiblement perpendiculaires à l'axe de rotation du rotor de séparation (3).

5. Moissonneuse-batteuse selon la revendication 4, **caractérisée en ce que** la zone des éléments de guidage (12) associée au groupe de couteaux de hachage (13), rapporté à la direction d'écoulement du produit haché, est subdivisée en une zone antérieure à pente constante et une zone postérieure, dans laquelle les parties des éléments de guidage (12) tournées vers le groupe de couteaux de hachage (13) sont essentiellement perpendiculaires à l'axe de rotation (14) du rotor de séparation (3).

6. Moissonneuse-batteuse selon la revendication 5, **caractérisée en ce que** la longueur de la zone postérieure est double ou sensiblement double de la longueur de la zone antérieure.

7. Moissonneuse-batteuse selon la revendication 6, **caractérisée en ce que** l'espace annulaire (35) entre le rotor de séparation (3) et l'enveloppe (4), dans la zone postérieure devant le groupe de couteaux de hachage (13), peut être diminué pour la fonction hachage et augmenté pour la fonction formation d'andains.

8. Moissonneuse-batteuse selon la revendication 7, **caractérisée en ce que** la zone de l'enveloppe (4) associée au groupe de couteaux de hachage (13) est conformée en un volet (17) au contour adapté, solidaire d'un axe de pivotement (18) qui est parallèle à l'axe de support (15) des couteaux de hachage (13), et peut pivoter sous l'action d'un mécanisme de pivotement.

9. Moissonneuse-batteuse selon les revendications 7 et 8, **caractérisée en ce que** le volet (17) est monté au moyen de gonds formant axe de pivotement (18) dans des paliers (19, 20) fixés à l'enveloppe (4) côté extérieur, et **en ce qu'**il peut peut être amené par pivotement sur les gonds, dans une position à l'extérieur de l'enveloppe (4), au moyen d'une tige de traction (26) et d'un levier d'entraînement (27) agissant à l'encontre de la force d'un ressort (29),.

10. Moissonneuse-batteuse selon une ou plusieurs des revendications 7 à 9 précédentes, **caractérisée en ce que** l'axe de support (15) pour les couteaux de hachage (13) est monté sur le volet (17) pivotant et **en ce que** le porte-couteau (16) pour les couteaux de hachage (13) est solidaire du volet.

11. Moissonneuse-batteuse selon la revendication 9, **caractérisée en ce que** les couteaux de hachage (13) sont montés sur un système de leviers (38) auquel est reliée une deuxième tige de traction (39) qui est déplacée en synchronisme avec les premières tiges de traction (24, 25), de telle sorte qu'à l'encontre de l'action d'un ressort de compression (40), les couteaux de hachage (13) ou le volet (17) puissent pivoter indépendamment l'un de l'autre sans actionnement d'un mécanisme d'entraînement linéaire (28) agissant sur la tige de traction.

12. Moissonneuse-batteuse selon une ou plusieurs des revendications 1 à 9 précédentes, **caractérisée en ce que** le dispositif de hachage (50) à flux axial, qui comprend les couteaux de hachage (13) et les espaces radiaux (11), est disposé dans zone d'extrémité postérieure du rotor de séparation.
